(19) Europäisches Patentamt
European Patent Office
Office européen des brevets

(11) Veröffentlichungsnummer: **0 026 489**
**B1**

(12) # EUROPÄISCHE PATENTSCHRIFT

(45) Veröffentlichungstag der Patentschrift: **02.05.84**

(51) Int. Cl.³: **C 09 B 67/24,**
C 09 B 67/32, C 09 B 67/42

(21) Anmeldenummer: **80105853.8**

(22) Anmeldetag: **26.09.80**

(54) **Aufbaugranulate wasserlöslicher Farbstoffe, Verfahren zur Herstellung und Verwendung zum Färben.**

(30) Priorität: **02.10.79 CH 8885/79**

(43) Veröffentlichungstag der Anmeldung:
**08.04.81 Patentblatt 81/14**

(45) Bekanntmachung des Hinweises auf die Patenterteilung:
**02.05.84 Patentblatt 84/18**

(84) Benannte Vertragsstaaten:
**BE CH DE FR GB LI**

(56) Entgegenhaltungen:
**DE - A - 2 616 639**
**FR - A - 1 193 828**
**FR - A - 2 183 840**
**FR - A - 2 277 127**
**FR - A - 2 373 592**
**FR - A - 2 373 593**
**FR - A - 2 388 028**

**ENCYCLOPEDIA OF POLYMER SCIENCE AND TECHNOLOGY, VOL. 14, pages 244/245**

(73) Patentinhaber: **CIBA-GEIGY AG**
**Postfach**
**CH-4002 Basel (CH)**

(72) Erfinder: **Bruttel, Beat, Dr.**
**Ob den Reben 5**
**CH-4461 Böckten (CH)**
Erfinder: **Schneider, Hansjörg**
**Zihlackerstrasse 36**
**CH-4153 Reinach (CH)**
Erfinder: **Millioud, Alain**
**Lettenweg 113**
**CH-4123 Allschwil (CH)**
Erfinder: **Rosch, Michael**
**Feldstrasse 106**
**CH-4123 Allschwil (CH)**

(74) Vertreter: **Berg, Wilhelm, Dr. et al,**
**Mauerkircher Strasse 45**
**D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 026 489 B1**

# Aufbaugranulate wasserlöslicher Farbstoffe, Verfahren zur Herstellung und Verwendung zum Färben

Die Erfindung betrifft ein Verfahren zur Herstellung von Aufbaugranulaten wasserlöslicher Farbstoffe, sowie als industrielles Erzeugnis, die gemäss dem Verfahren erhaltenen Granulate.

In der DE—OS 26 16 639 ist ein Verfahren zur Herstellung von Aufbaugranulaten von Farbstoffen bzw. optischen Aufhellern unter Verwendung eines spezifischen Haftmittels, welches zwischen 50 bis 150°C erweicht oder schmilzt, beschrieben. Als Haftmittel werden Substanzen aus den verschiedensten Verbindungsklassen, wie beispielsweise Harnstoff, Dextrin, Sorbit, ferner äthoxyliertes Kokosfettalkoholsulfat, Laurylpyridiniumchlorid, verschiedene Zucker oder auch kristallwasserhaltige Salze, wie Natriumcarbonat-10-Hydrat genannt. Das eigentliche Granulierverfahren besteht im wesentlichen aus einem Vermischen der Farbstoffe bzw. Aufheller mit dem Haftmittel und gegebenenfalls weiteren Zusätzen und anschliessender Erwärmung des Gemisches unter ständiger Bewegung, wobei es zur Bildung von Granulaten kommt. Die nach diesem Verfahren erhaltenen Granulate genügen jedoch, was deren Benetzbarkeit und Löslichkeit in kaltem Wasser ambetrifft, nicht den Anforderungen der Praxis.

Ferner ist in der FR—A—2 373 592 ein Verfahren zur Herstellung von staubarmen Farbstoff- und optischen Aufhellerpräparaten beschrieben, wonach eine lang anhaltende Staubbindewirkung durch die Verwendung einer Hilfsmittelkombination, nämlich eines Haftmittels und eines Staubbindemittels erreicht wird. Als Haftmittel sind wiederum Verbindungen wie Sorbit, Harnstoff oder verschiedene Zucker genannt, während als Staubbindemittel vor allem nichtionische Tenside zur Anwendung gelangen. Die Herstellung der Präparate erfolgt hier durch ein intensives Vermischen der Komponenten bei Raumtemperatur.

Es ist bekannt, z.B aus dem Artikel von H.B. Ries, Aufbereitungs-Technik Nr. 11/1971, S. 675, pulverförmige Feststoffe durch Partikelvergrösserung, sogenannte Aufbaugranulierung, zu granulieren. Bei der Aufbaugranulierung von pulverförmigen Farbstoffen, wie sie im Anschluss an Mahl- und Mischverfahren oder über die Zerstäubungstrocknung erhalten werden, wird meistens das Schüttgewicht des Ausgangsprodukts nicht wieder erreicht, speziell bei den sprühgetrockneten Produkten.

Die Aufgabe der vorliegenden Erfindung liegt darin, Aufbaugranulate zu erhalten, die möglichst ein Schüttgewicht aufweisen, das mindestens annähernd gleich hoch liegt wie dasjenige des Ausgangsproduktes und sonst den heutigen Handelsformen in jeder Hinsicht genügen.

Es wurde nun gefunden, dass man gemäss vorliegender Erfindung Aufbaugranulate erhalten kann, die diese Anforderungen erfüllen. Bei zerstäubungsgetrockneten Produkten wird das Schüttgewicht sogar verbessert. Insbesondere weisen die gemäss vorliegender Erfindung erhaltenen kompakten Aufbaugranulate überraschenderweise eine in jeder Beziehung gute Löslichkeit inklusive der Löslichkeit in kaltem Wasser auf. Die Benetzbarkeit und Anteig- bzw. Anschlämmbarkeit ist sehr gut. Die erfindungsgemäss eingesetzten Additive bringen gleichzeitig weitere Vorteile mit sich. Sie verbessern nicht nur die Löslichkeit bzw. Lösegeschwindigkeit der Granulate sondern sie bewirken ausserdem gute Staubbindung und mechanische Stabilität, Eigenschaften die bei Granulathandelsformen sehr erwünscht sind. Die Granulate sind leicht dispergierbar, führen zu stabilen Dispersionen und ergeben egale Färbungen.

Die Erfindung betrifft somit ein Verfahren zur Herstellung von Aufbaugranulaten wasserlöslicher Farbstoffe, in dem man mindestens einen wasserlöslichen Farbstoff im pulverförmigen Zustand mit einem Granulierhilfsmittel versetzt und das Gemisch unter Roll- und/oder Mischbewegung durch eine Partikelvergrösserung in eine körnige Form überführt, dadurch gekennzeichnet, dass man als Granulierhilfsmittel

a) mindestens eine Verbindung der Formel I

$$A{-}(CH_2CH_2O)_n{-}H \qquad (I)$$

in der A die Gruppe R—O— oder

$$R'{-}\underset{\underset{O}{\|}}{C}{-}O{-},$$

R einen 8 bis 22 Kohlenstoffatome aufweisenden aliphatischen oder alicyclischen Kohlenwasserstoffrest, R' einen 8 bis 22 Kohlenstoffatome aufweisenden aliphatischen Kohlenwasserstoffrest, und n 10 bis 200, vorzugsweise 20 bis 150, bedeuten, oder

b) eine Mischung aus einer Verbindung der Formel II

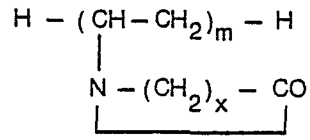

(II)

in der m 50 bis 500 und x 3 bis 5 bedeuten, mit einer Verbindung der Formel III

$$R_1\text{—NH—CO—NH—}R_1 \qquad \text{(III)}$$

in der $R_1$ unabhängig voneinander Wasserstoff oder Methyl bedeutet, oder

c) eine Mischung einer Verbindung der Formel I mit mindestens einer Verbindung der Formel II oder III verwendet, und das Granulierhilfsmittel bzw.-Gilfsmittelgemisch über seinen Erweichungspunkt bzw. Erweichungsbereich erwärmt, wobei das Granulierhilfsmittel bzw.-Gilfsmittelgemisch einen Erweichungspunkt bzw. Erweichungsbereich zwischen 30 und 150°C, vorzugsweise zwischen 40 und 100°C aufweist und in Mengen von 5 bis 50, vorzugsweise 10 bis 30 Gew.%, bezogen auf den Farbstoff, verwendet wird.

Neben diesen Granulierhilfsmitteln können auch weitere Zusätze vorhanden sein,. wie insbesondere Coupagemittel in Mengen von 0,1 bis 50 Gewichtsprozent, bezogen auf den zu granulierenden Farbstoff, wie Natriumchlorid oder Natriumsulfat, oder auch Netzmittel, Dispergatoren und Staubbindemittel.

Gegenstand der Erfindung sind ferner die nach dem erfindungsgemässen Verfahren erhaltenen Farbstoffgranulate.

Als wasserlösliche Farbstoffe kommen beispielsweise saure und basische Farbstoffe, wie Metallkomplex-, Chromierungs-, Entwicklungs- und Beizenfarbstoffe sowie vor allem Reaktivfarbstoffe in Frage. Es handelt sich insbesondere um sulfosäure- bzw. carbonsäuregruppenhaltige metallfreie oder metallhaltige und metallisierbare Mono-, Dis- und Polyazofarbstoffe, Formazanfarbstoffe, Anthrachinon-, Nitro-, Methin-, sauer Triphenylmethan-, Xanthon-, Naphthazarin, Chinophthalon- und Phthalocyaninfarbstoffe, sowie vorzugsweise um solche Farbstoffe, die mindestens einen Faserreaktiven Rest im Farbstoffmolekül aufweisen, wie insbesondere heterocyclische Gruppen oder eine Acylgruppe von einer Carbonsäure, wobei diese Gruppen mindestens ein unter Färbebedingungen abspaltbares Halogenatom aufweisen.

Als wasserlösliche Metallkomplexfarbstoffe kommen sulfonsäure-bzw. carbonsäuregruppenhaltige Metallkomplexfarbstoffe, beispielsweise 1:1- oder 1:2-Metallkomplexe von Azo- oder Azomethinfarbstoffen oder metallisierte Phthalocyanine, insbesondere Kupfer- und Nickelphthalocyanine, in Betracht. Bei den 1:1- und 1:2-Metallkomplexen handelt es sich vorzugsweise um 1:1-Nickelkomplexe, 1:1-Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chromkomplexe von insbesondere o-Carboxy-o'-hydroxy-, o-Hydroxy-o'-amino- oder o,o'-Dihydroxyazofarbstoffen des Benzol-azo-benzol-, Naphthalin-azo-naphthalin-, Benzol-azo-naphthalin-, Benzol-azo-pyrazolon-, Benzol-azo-pyridon- oder Benzol-azo-acetessigsäureamid-Typs, wobei diese Gruppierungen unsubstituiert oder auch substituiert sein können. Als Substituenten kommen z.B. in Betracht: gegebenenfalls substituierte Sulfonsäureamide oder Sulfone, Halogen oder Nitro.

Die erfindungsgemäss verwendeten Kupfer- und Nickelphthalocyanine leiten sich von den üblichen Gemischen verschiedener Sulfonierungsgrade ab und enthalten vorzugsweise 2 bis 3 oder auch 4 sulfatierte Sulfonsäure-$\beta$- oder -$\gamma$-hydroxyalkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Aethyl, Propyl, Butyl, oder niedere Hydroxyalkylgruppen, wie 2-Hydroxyäthyl, 2-Hydroxypropyl, 3-Hydroxypropyl.

Beim vorliegenden Verfahren verwendet man die sulfonsäuregruppenhaltigen Azofarbstoffe vorzugsweise in Form ihrer Metallsalze, z.B. der Kalium- oder vor allem Natriumsalze. Vorzugsweise handelt es sich um wasserlösliche Reaktivfarbstoffe, insbesondere um reaktive saure Azo- oder Anthrachinonfarbstoffe.

Geeignete faserreaktive Gruppen sind z.B. heterocyclische Gruppen oder eine Acylgruppe von einer Carbonsäure, wobei diese Gruppen mindestens ein abspaltbares Halogenatom aufweisen. Es handelt sich beispielsweise um die folgenden Gruppen: s-Triazinylreste, die am Triazinring ein oder zwei Halogenatome, wie Chlor-, Fluor- oder Bromatome tragen, Pyrimidylreste, die ein bis drei Halogenatome wie Chlor- und/oder Fluoratome bzw. eine oder zwei Arylsulfonyl- oder Alkansulfonylgruppen am Pyrimidinring tragen, Dichlorchinoxylinyl-, 2-Chlorbenzthiazolyl-, Chloracetylaminogruppen oder $\alpha,\beta$-Dibrompropionylaminogruppen.

Desweiteren kommen als faserreaktive Gruppen z.B. noch in Frage Halogencyclobutan-, Mono- oder Bis-($\gamma$-Halogen-$\beta$-hydroxypropyl)aminogruppen, $\beta$-Halogenäthylsulfamidreste, $\beta$-Halogenäthoxygruppen, $\beta$-Halogenäthylmercaptogruppen, $\gamma$-Halogen-$\beta$-hydroxy-propylsulfamidreste oder 2,3-Epoxypropylgruppen.

Die Farbstoffe können gegebenenfalls auch in Mischungen miteinander oder gegebenenfalls mit Farbstoffen von einem anderen Typ vorliegen.

Die erfindungsgemäss verwendbaren Farbstoffe sind bekannt und können nach an sich bekannten Methoden hergestellt werden.

Aliphatische Kohlenwasserstoffreste R und R′ der Granulierhilfsmittel der Formel I sind gesättigte oder ungesättigte, geradkettige oder verzweigte Kohlenwasserstoffreste, die sich von aliphatischen Alkoholen und Säuren mit 8 bis 22, vorzugsweise 8 bis 20 Kohlenstoffatomen ableiten.

Alicyclische Kohlenwasserstoffreste R sind vor allem polycyclische Reste von alicyclischen Alkoholen, wie Hydroabietylalkohol.

Verbindungen der Formel I in der A die Gruppe R—O— bedeutet, sind Umsetzungsprodukte aus 10 bis 200, vorzugsweise 20 bis 150 Mol Aethylenoxid mit höheren Alkoholen mit 8 bis 22 Kohlenstoffatomen, wie Decyl-, Lauryl-, Tridecyl-, Myristyl-, Cetyl-, Stearyl-, Oleyl-, Arachidyl- oder Behenylalkohol; insbesondere Umsetzungsprodukte aus 35 bis 80 Mol Aethylenoxid mit höheren Alkoholen wie z.B. 18 Kohlenstoffatome aufweisenden, geradkettigen gesättigten oder ungesättigten Alkohole, wie das Umsetzungsprodukt aus Oleylalkohol und 80 Mol Aethylenoxid oder aus Stearylalkohol und 35 Mol Aethylenoxid; ferner Umsetzungsprodukte aus alicyclischen Alkoholen mit 80 bis 120 Mol Aethylenoxid wie Hydroabietylalkohol veräthert mit 100 Mol Aethylenoxid.

Verbindungen der Formel I in der A die Gruppe

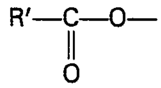

bedeutet, sind Umsetzungsprodukte aus 10 bis 200, vorzugsweise 20 bis 150 Mol Aethylenoxid mit geradkettigen aliphatischen Säuren wie Fettsäuren, z.B. Capryl-, Caprin-, Laurin-, Myristin-, Palmitin-, Stearin-, Arachin-, Behen-, Kokosfett- ($C_8$—$C_{18}$), Decen-, Dodecen-, Tetradecen-, Hexadecen-, Olein-, Linol-, Linolen-, Ricinolein-, Eikosen-, Dokosen- oder Clupanodonsäure; insbesondere das Kondensationsprodukt aus Oelsäure und 20 Mol Aethylenoxid.

Verbindungen der Formel II sind insbesondere Polyvinylcaprolactam und vorzugsweise Polyvinylpyrrolidone mit einem Molgewicht bis ca. 40,000 und Verbindungen der Formel III sind Harnstoff und N,N′-Dimethylharnstoff.

Als erfindungsgemäss verwendbare Granulierhilfsmittel verwendet man vorteilhaft Verbindungen der Formel I, allein oder im Gemisch mit einer verschiedenen Verbindung der Formel I oder mit einer Verbindung der Formel II oder III oder ein Gemisch einer Verbindung der Formel II mit einer Verbindung der Formel III. Von besonderem Interesse sind diese Gemische wenn sie als eutektische Mischung vorliegen, wobei der Erweichungspunkt bzw. Erweichungsbereich der Mischung zwischen 30 und 150°C, vorzugsweise zwischen 40 und 100°C liegt. Bevorzugt sind Verbindungen der Formel I.

Bei den erfindungsgemäss verwendbaren Hilfsmittelgemische handelt es sich z.B. um ein Gemisch aus einer Verbindung der Formel I, worin A die Gruppe

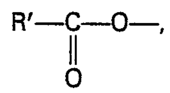

R′ einen 8 bis 22 Kohlenstoffatome aufweisenden, ungesättigten, geradkettigen, Kohlenwasserstoffrest und n 10 bis 30 bedeuten, mit Harnstoff, gegebenenfalls im Gemisch mit schmelzpunktherabsetzenden Zusätzen, vor allem um ein Gemisch aus einem Kondensationsprodukt aus Oelsäure mit 20 Mol Aethylenoxid mit Harnstoff, gegebenenfalls im Gemisch mit schmelzpunktherabsetzenden Zusätze oder um ein Gemisch aus einer Verbindung der Formel II, worin x 3 ist, und m die oben angegebene Bedeutung hat, mit Harnstoff, gegebenenfalls im Gemisch mit schmelzpunktherabsetzenden Zusätzen, verwendet.

Die zu granulierenden Farbstoffe müssen in trockener Form vorliegen z.B. als Rohware, als zerstäubungsgetrocknete oder in konventioneller Art getrocknete Ware z.B. im Mahltrockner getrocknete Pulver.

Ferner ist es zweckmässig, dass die Partikelgrösse aller Komponenten in einem engen Bereich (z.B. 30 bis 150 $\mu$m) liegt, um somit einen gleichmässigen Kornaufbau zu gewährleisten.

Das Granulierhilfsmittel kann dem Farbstoffpulver in festem Zustand zugegeben werden und anschliessend unter Bewegung zusammen mit dem Farbstoff über den Erweichungspunkt des Granulierhilfsmittels erwärmt werden, oder man erwärmt den Farbstoff vor der Zugabe des Granulierhilfsmittels auf eine solche Temperatur, dass das Granulierhilfsmittel nach der Zugabe erweicht. Man kann aber auch das geschmolzene Granulierhilfsmittel zu dem gegebenenfalls erwärmten Farbstoff geben, vorzugsweise durch Aufsprühen oder Eindüsen.

Das bevorzugte Verfahren der Partikelvergrösserung besteht dabei z.B. aus folgenden Operationen:

— Herstellen der homogenen, granulierfähigen Mischung aus Farbstoff, Granulierhilfsmittel und gegebenenfalls den weiteren Zusätzen;

— Erwärmen dieser Mischung unter mischender oder rollender Bewegung auf mindestens 40°C, vorzugsweise auf 50 bis 95°C, während etwa 5 bis 30 Minuten;

— Zerkleinern der anfallenden Klumpen;

— Abkühlen unter Bewegen der Granulate auf ca. 40—50°C.

Die Granulatgrösse lässt sich dabei je nach Granulierhilfsmittelmenge in dem Bereich von 90 $\mu$m bis 20 mm variieren.

Für die Durchführung des erfindungsgemässen Verfahrens verwendet man zweckmässig die bekannten, üblichen kontinuierlichen und diskontinuierlichen Granulierapparate, wie beispielsweise Granuliertrommel, Granulierteller, wie z.B. EIRICH-Teller, und Trockner, beispielsweise Conaform- oder Taumeltrockner.

Geeignete Heizquellen sind Strahlungsheizung, wie Mikrowellenstrahlung oder insbesondere IR-Strahlung, oder Konvektionsheizung, wie Mantel- oder Rührwellenheizung.

Das erfindungsgemässe Verfahren wird bei einer Temperatur durchgeführt, die mindestens so hoch liegt, dass das Granulierhilfsmittel zu erweichen beginnt, zweckmässig aber bei Temperaturen, die etwa 5—30°C darüber liegen. Während der Erwärmung und bis zum Abschluss der Granulatbildung soll eine schonende Drehbewegung mit einer Umfangsgeschwindigkeit von 0,3—2,2 m/sec, vorzugsweise von 0,5—2,0 m/sec. stattfinden.

Mittels dieses Verfahrens ist es somit möglich, wasserlösliche Farbstoffe, insbesondere in Pulverform, mit einer Anfangsfeinheit von etwa 1 bis 150 $\mu$m in eine körnige nichtstaubende Form mit einer Korngrösse von etwa 100 $\mu$m bis 20 mm überzuführen, die eine Restfeuchte von ca. 2 bis 10 Gewichtsprozent aufweisen.

Man verwendet zweckmässig 5—50 Teile, vorzugsweise 10—30 Teile des Granulierhilfsmittels auf 100 Teile des zu granulierende Rohfarbstoffes. Die Korngrösse des Granulierhilfsmittels soll zwischen 0,1 und 0,5 mm liegen. Bei kleinerer Korngrösse entsteht kein Granulat und bei grösserer Korngrösse erhält man ein uneinheitliches Granulat hit schlechter Gutkornausbeute. Unter Gutkornausbeute versteht man denjenigen Anteil des erhaltenen Granulates, der einen Korndurchmesser zwischen 0,2 und 2 mm aufweist.

Die erfindungsgemässen Farbstoff-Granulate sind abriebfest, rieselfähig, nicht stäubend, von hohem Schüttgewicht und vor allem in kaltem Wasser sehr leicht und schnell löslich. Sie sind besonders geeignet zur Herstellung von wässrigen Färbeflotten und Druckpasten, welche zum Färben und Bedrucken der verschiedensten für die jeweilige Farbstoffklasse geeigneten Materialien verwendet werden können.

In den nachfolgenden Beispielen, welche die Erfindung erläutern, bedeuten Teile Gewichtsteile. Die Temperaturen sind in Grad Celsius angegeben. Die Farbstoffe liegen als Alkalisalz, vor allem als Natriumsalz vor. Die Bezeichnung staubarm bei den Präparaten bedeutet, dass praktisch keine Teilchen mit einer Grösse unter 50 $\mu$m vorhanden sind.

Zur Bestimmung des Staubverhaltens wird folgender Staubtest durchgeführt:

Auf einen Metallzylinder von 500 ccm Inhalt wird ein Metalltrichter mit einem lichten Durchmesser von 10 cm und einem Rohr (lichter Durchmesser 15 mm) gesetzt, dessen unteres Rohrende bis zur 200 ccm-Grenze des Zylinders reicht. Auf der Höhe von 400 ccm des Zylinders wird ein gelochter Papier-Rundfilter (Schleicher und Schüll LS14) befestigt, das mit Wasser derart angefeuchtet ist, dass das Filterpapier nur mässig feucht, aber nicht triefend nass ist. Dann werden 10 g der zu prüfenden Substanz durch den Trichter rasch eingeschüttet, 3 Minuten gewartet, der Trichter herausgenommen und das Papierrundfilter durch Durchschneiden entfernt. Dieses Filterpapier wird dann durch eine 5-stufige Bewertungsskala wie folgt bewertet:

Note 1 = stark stäubend, wenn Papierrundfilter stark getönt bis intensiv gefärbt ist.

Note 2 = erheblich stäubend, wenn Papierrundfilter schwach getönt ist,

Note 3 = mässig stäubend, wenn sich auf dem Papierrundfilter viele Farbflecken, die sich teilweise berühren, befinden;

Note 4 = schwach stäuben, wenn sich auf dem Papierrundfilter Farbstofftupfen, aber keine zusammenhängenden Farbflecken befinden;

Note 5 = staubarm, wenn der Papierrundfilter eine kaum sichtbare Anfärbung oder höchstens vereinzelte Farbstofftupfen aufweist.

Zur Bestimmung der Kaltwasserlöslichkeit der Farbstoff-Granulate wird folgender Test durchgeführt:

Eine bestimmte Menge (in g) vom zu prüfenden Farbstoff-Granulat wird in 200 ml entsalztes Wasser bei 20°C in einem 400 ml Becherglas unter Rühren (magnetrührer bei 750 U/Min.) gegeben und 5 Minuten gerührt. Dann wird die Farbstoff-Lösung durch einen Papierfilter (SS 1450 CV Durchmesser 7 cm) filtriert und mit 50 ml entsalztem Wasser gespült.

Als Kaltwasserlöslichkeit wird die höchste Konzentration des Farbstoffes im Wasser bewertet, die keinen Filterrückstand ergibt.

Beispiel 1

Trockener, zerstäubungsgetrockneter Farbstoff der Formel

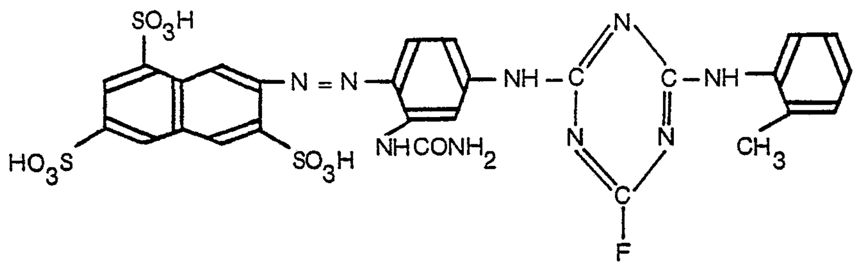

(Partikelgrösse 10 bis 50 $\mu$m) wird mit 15 Gew.%, bezogen auf das Granulat, eines Umsetzungsproduktes aus technischem Hydroabietylalkohol (ein Gemisch aus ca. 45% Tetrahydroabietylalkohol, 40% Dihydroabietylalkohol und 15% Dehydroabietylalkohol) veräthert mit 100 Mol Aethylenoxid in Form von feinen Schuppen (Erweichungspunkt ca. 45°) in einem Mixer (z.B. vom Typ Lödigemischer) ca. 10 Minuten homogenisiert und dann innerhalb 30 Minuten auf 80° erwärmt. Nach Erreichen dieser Temperatur wird während des Weiterlaufens des Mischers wiederum auf Raumtemperatur abgekühlt.

Man erhält ein staubarmes Farbstoff-Granulat, das problemlos aus dem Mischer entfernt und falls nötig noch gesichtet werden kann, um noch evtl. vorhandenen, geringen Staubanteil abzutrennen.

Das Granulat hat überraschenderweise ein hohes Schüttgewicht (mindestens 700 g/l) und weist eine gute Kaltwasserlöslichkeit auf. Der Prozess verläuft unter Schonung des Reaktivfarbstoffes, der seine Reaktivität voll behält. Der Staubtest des ungesichteten Granulats ergibt einen Staubwert von 4—5 auf einer Skala von 1 bis 5, mit 5 als beste Note.

Zusammensetzung des Granulates

| | |
|---|---|
| 79,5% | Rohfarbstoff |
| 15% | Granulierhilfsmittel |
| ca. 5,5% | Restfeuchte |

Granulat-Daten

Schüttgewicht: >700 g/l (Ausgangsware/Rohfarbstoff 550 g/l)
Staubnote:
Heisswasserlöslichkeit (60°C): 100 g/l (Ausgangsware/Rohfarbstoff 80 g/l)
Kaltwasserlöslichkeit (20°C): ca. 50 g/l

| | | |
|---|---|---|
| Kornverteilung: | <250 $\mu$m: | 3,4% |
| | 250—2000 $\mu$m: | 92,6% |
| | >2000 $\mu$m: | 4,0% |

Ausfärbung (nach dem üblichen Ausziehverfahren):
Nuance gut, Reinheit gut, Stärke gut

Beispiel 2

Trockener, in einem Mahltrockner getrockneter Farbstoff der im Beispiel 1 angegebenen Formel wird mit ca. 12,5%, bezogen auf das Granulat, eines Umsetzungsproduktes aus Oleylalkohol mit 80 Mol Aethylenoxid (Erweichungspunkt ca. 50°) in einem Lödigemischer wie im Beispeil 1 weiterverarbeitet. Man erhält ein Farbstoff-Granulat mit einer Durchschnittskorngrösse von 850 $\mu$m, einem Schüttgewicht von über 700 g/l und einer Löslichkeit in kaltem Wasser (20°) von 50 g/l.

Beispiel 3

Trockener, in einem Mahltrockner getrockneter Farbstoff der im Beispiel 1 angegebenen Formel wird mit ca. 17,5%, bezogen auf das Granulat, des im Beispiel 1 angegebenen Umsetzungsproduktes wie im Beispiel 1 angegeben in einem Lödigemischer verarbeitet.

Man erhält ein Farbstoff-Granulat mit einer Durchschnittskorngrösse von etwa 1200 $\mu$m, das sehr staubarm ist (Staubnote 5), welches eine Kaltwasserlöslichkeit von 50 g/l und einem Schüttgewicht von über 800 g/l aufweist.

Beispiel 4

Wenn man den im Beispiel 1 angegebenen Farbstoff durch den Farbstoff der Formel

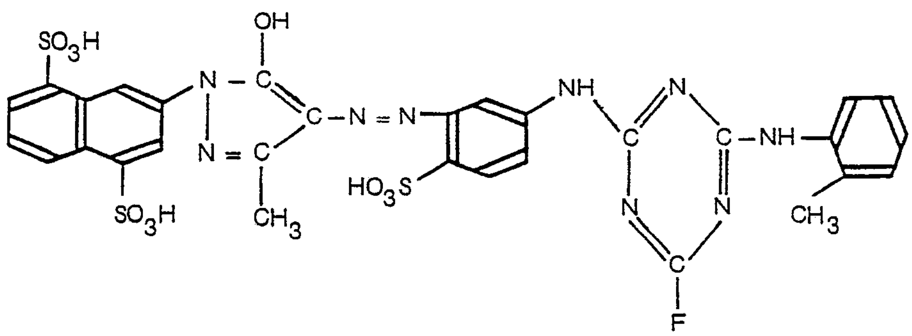

welcher in einem Malhtrockner getrocknet wurde, ersetzt, und sonst wie im Beispiel 1 angegeben arbeitet, so erhält man ein staubarmes Farbstoff-Granulat (Staub-Note 4) mit einer Durchschnittskorngrösse von ca. 620 $\mu$m, welches ein sehr hohes Schüttgewicht (über 900 g/l) aufweist.

Zusammensetzung des Granulates:

| | |
|---|---|
| 80% | Rohfarbstoff |
| 15% | Hilfsmittel |
| 5% | Restfeuchte |

Beispiel 5

Wenn man den im Beispiel 2 angegebenen, getrochneten Farbstoff durch den Farbstoff der Formel

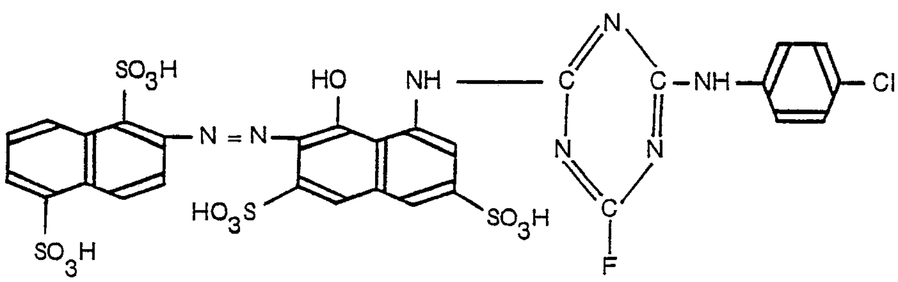

ersetzt und ca. 20%, bezogen auf das Granulat, des dort angegebenen Hilfsmittels verwendet und sonst wie im Beispiel 2 angegeben ist, verfährt, so erhält man ein Farbstoff-Granulat mit einer Durchschnittskorngrösse von ca. 220 $\mu$m und mit einem sehr hohen Schüttgewicht (über 800 g/l).

Beispiel 6

Wenn man den im Beispiel 4 angegebenen, getrockneten Farbstoff durch den Farbstoff der Formel

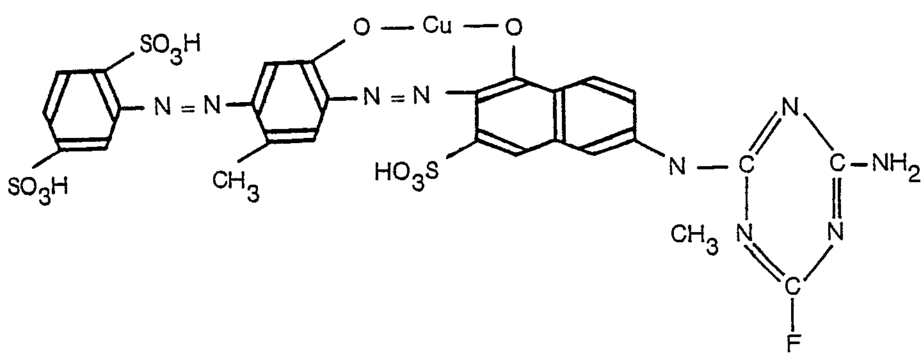

ersetzt und ca. 20%, bezogen auf das Granulat, des dort angegebenen Hilfsmittels verwendet, und

sonst wie im Beispiel 4 angegeben ist, verfährt, so erhält man ein Farbstoff-Granulat mit einer Durchschnittskorngrösse von 350 $\mu$m und einem sehr hohen Schüttgewicht (über 800 g/l).

Beispiel 7

Wenn man den im Beispiel 2 angegebenen, getrockneten Farbstoff durch den Farbstoff der Formel

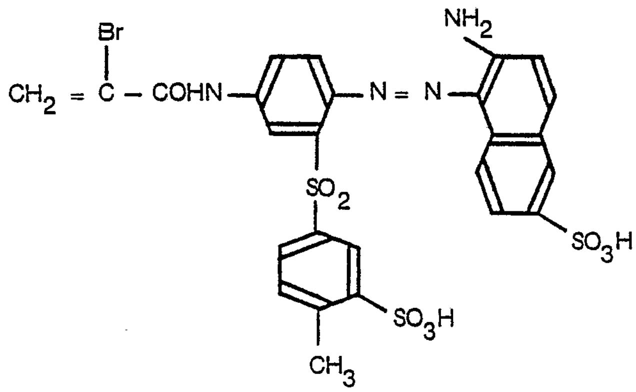

ersetzt und sonst wie im Beispiel 2 angegeben verfährt, so erhält man ein Farbstoff-Granulat mit einer Durchschnittskorngrösse von 280 $\mu$m und einem sehr hohen Schüttgewicht (über 800 g/l).

Beispiel 8

Wenn man den im Beispiel 3 angegebenen, getrockneten Farbstoff durch den im Beispiel 7 angegebenen Farbstoff ersetzt, und sonst wie im Beispiel 3 verfährt, so erhält man ein Farbstoff-Granulat mit einer Durchschnittskorngrösse von ca. 500 $\mu$m und einem sehr hohen Schüttgewicht (über 800 g/l).

Beispiel 9

Der Filterpresskuchen des Farbstoffs der Formel

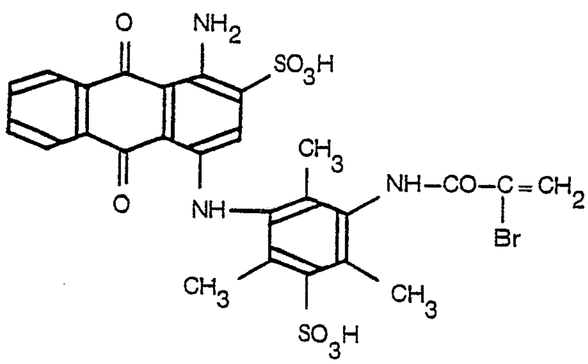

wird mit einer wässrigen Lösung von ca. 10% Dextrin, berechnet auf den Farbstoff, vermischt und auf dem Mahltrockner zu einem Pulver mit einem Schüttgewicht von 650 g/l und mittlerer Korngrösse von 200 $\mu$m getrocknet.

Das so erhaltene Farbstoffpulver wird dann mit ca. 24%, berechnet auf den Farbstoff, des im Beispiel 1 angegebenen Granulierhilfsmittels wie im Beispiel 1 angegeben granuliert. Man erhält ein Farbstoffgranulat folgender Zusammensetzung:

| | |
|---|---|
| 75% | Rohfarbstoff + Restfeuchte |
| 7% | Dextrin |
| 18% | Hilfsmittel |

Granulat-Daten:

| | |
|---|---|
| Schüttgewicht: | 650 g/l |
| Staubnote: | 4—5 |
| Heisswasserlöslichkeit (60°): | 80 g/l |
| Kaltwasserlöslichkeit (20°): | ca. 30 g/l |
| Kornverteilung: | <250 μm: 2% |
| | 250—2000 μm: 94,3% |
| | >2000 μm: 3,7% |

Beispiel 10

Wenn man den im Beispiel 9 angegebenen Farbstoff durch den Farbstoff der Formel

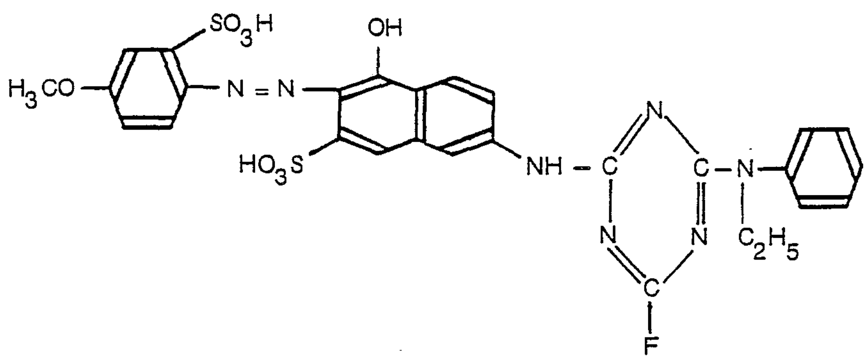

ersetzt und sonst wie im Beispiel 9 angegeben verfährt, so erhält man ein Farbstoff-Granulat mit folgenden Daten:

Zusammensetzung:

| | |
|---|---|
| 75% | Rohfarbstoff + Restfeuchte |
| 7% | Dextrin |
| 18% | Hilfsmittel |

| | |
|---|---|
| Schüttgewicht: | 730 g/l |
| Staubnote: | 4 |
| Heisswasserlöslichkeit (60°): | 100 g/l |
| Kaltwasserlöslichkeit (20°): | 30 g/l |
| Kornverteilung: | <250 μm: 3% |
| | 250—2000 μm: 93,2% |
| | >2000 μm: 3,8% |

Beispiel 11

Wenn man in den Beispielen 9 und 10 anstelle der Dextrinlösung Naphthalinsulfonsäure-Formaldehyd-Kondensationsprodukt und Dinatriumhydrogenphosphat vor der Trocknung im Mahltrockner zugibt und sonst wie in den Beispielen angegeben verfährt, so erhält man ähnliche Farbstoffgranulate folgender Zusammensetzung:

| | |
|---|---|
| 73% | Rohfarbstoff + Restfeuchte |
| 15% | Hilfsmittel |
| 3% | Dinatriumhydrogenphosphat |
| 9% | Naphthalinsulfonsäure-Formaldehyd-Kondensationsprodukt |

Beispiel 12

Trockener, zerstäubungsgetrockneten Farbstoff der Formel

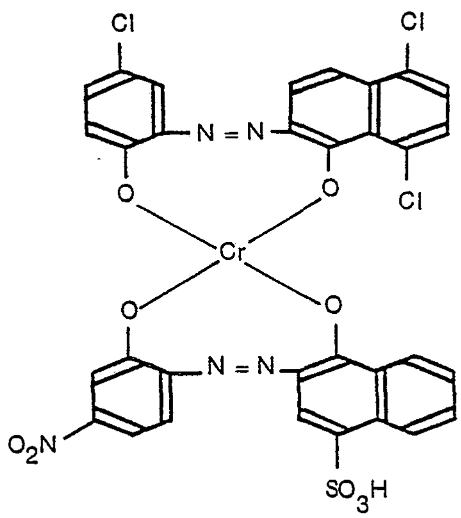

wird mit 6 Gew.%, bezogen auf das Granulat, eines Umsetzungsproduktes aus technischem Hydroabiethylalkohol (ein Gemisch aus ca. 45% Tetrahydroabiethylalkohol, 40% Dihydroabiethylalkohol und 15% Dehydroabiethylalkohol) veräthert mit 100 Mol Aethylenoxid in Form von feinen Schuppen und ca. 9,5% eines Umsetzungsproduktes aus Oleylalkohol mit 80 Mol Aethylenoxid in einem Mixer (z.B. vom Typ Lödigemischer) ca. 10 Minuten homogenisiert und dann innerhalb 30 Minuten auf 80° erwärmt. Nach Erreichen dieser Temperatur wird während des Weiterlaufens des Mischers wiederum auf Raumtemperatur abgekühlt.

Man erhält ein staubarmes Farbstoff-Granulat, das problemlos aus dem Mischer entfernt und falls nötig noch gesichtet werden kann, um noch evtl. vorhandenen, geringen Staubanteil abzutrennen.

Zusammensetzung des Granulates

| | |
|---|---|
| 79% | Rohfarbstoff |
| 6% | Hydroabiethylalkohol veräthert mit 100 Mol Aethylenoxid |
| 9,5% | Umsetzungsprodukt aus Oleylalkohol und 80 Mol Aethylenoxid |
| ca. 5,5% | Restfeuchte |

Granulat-Daten

| | |
|---|---|
| Schüttgewicht: | 650 g/l |
| Staubnote: | 3—4 |
| Kaltwasserlöslichkeit (20°C): | ca. 30 g/l |

Beispiel 13

Trockener, zerstäubungsgetrockneter 1:2 Co-Komplex des Farbstoffs der Formel

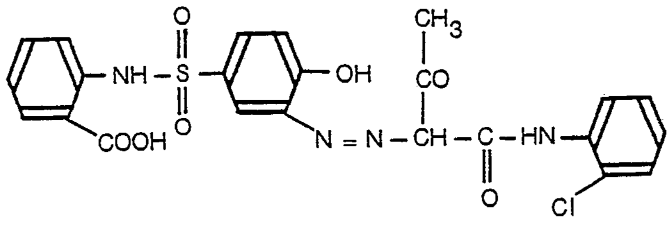

wird mit ca. 5% Harnstoff, bezogen auf das Granulat und 7% des im Beispiel 2 angegebenen Umsetzungsproduktes wie im Beispiel 1 angegebenen in einem Lödigemischer verarbeitet.

Man erhält ein Farbstoffgranulat folgender Zusammensetzung:

| | |
|---|---|
| 82% | Rohfarbstoff |
| 5% | Harnstoff |
| 7% | Granulierhilfsmittel |
| ca. 6% | Restfeuchte. |

Granulat-Daten

| | |
|---|---|
| Schüttgewicht: | 790 g/l |
| Staubnote: | 4 |
| Kaltwasserlöslichkeit (20°): | ca. 25 g/l |

Verwendet man anstelle der in den obigen Beispielen angegebenen Hilfsmittel entsprechende Mengen der in folgender Tabelle A aufgeführten Hilfsmittel bei im übrigen gleicher Arbeitsweise, so erhält man ebenbürtige Granulate mit hohem Schüttgewicht.

TABELLE A

| Beispiel Nr. | Granulierhilfsmittel |
|---|---|
| 14 | Kondensationsprodukt aus Oelsäure und 20 Mol Aethylenoxid |
| 15 | Gemisch aus dem Kondensationsprodukt aus Oelsäure und 20 Mol Aethylenoxid und Harnstoff Mischverhältnis 80 : 20 |
| 16 | Kondensationsprodukt aus Stearylalkohol und 35 Mol Aethylenoxid |
| 17 | Polyvinylpyrrolidon und Harnstoff (20 : 80) |

Beispiele 18 bis 28

Verwendet man anstelle der in den vorstehenden Beispielen verwendeten Farbstoffe die in den folgenden Tabellen B bis D angegebenen Metallkomplexfarbstoffe, bei gleicher Arbeitsweise, so erhält man Granulate ähnlicher Zusammensetzung, die ähnliche Eigenschaften aufweisen.

In der Tabelle B ist ein 1:2-Komplex-Farbstoff aufgeführt, der 2 Moleküle des gleichen Farbstoffes an 1 Metallatom komplex gebunden, enthält.

TABELLE B

| I | II | III | IV |
|---|---|---|---|
| Bsp. Nr. | Metall | Farbstoff | Farbton |
| 18 | Co | 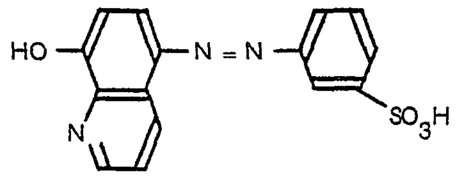 | Braun |

In der Tabelle C sind 1:2-Mischkomplexe aufgeführt, die je 1 Molekül eines Farbstoffes der Kolonne III und der Kolonne IV an 1 Metallatom der Kolonne II komplex gebunden enthalten.

TABELLE C

| I | II | III | IV | V |
|---|---|---|---|---|
| Bsp. Nr. | Metall | Farbstoff | Farbstoff | Farbton |
| 19 | Cr | 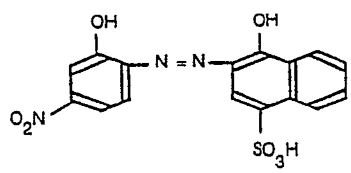 | 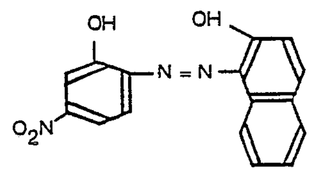 | Marine-blau |
| 20 | Fe | 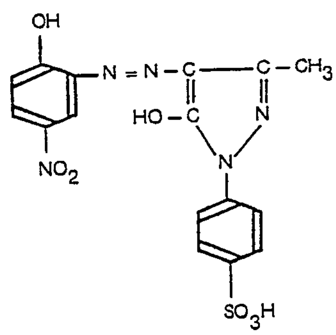 | 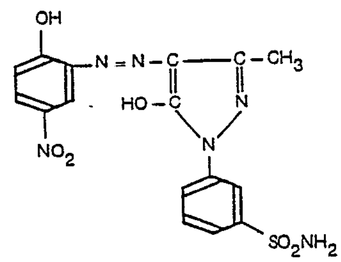 | Braun |
| 21 | Cr | 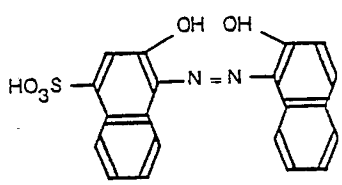 | 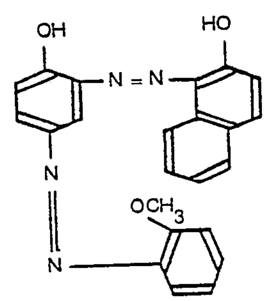 | Schwarz |
| 22 | Cr | 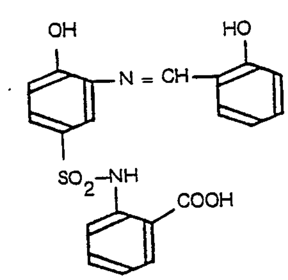 | 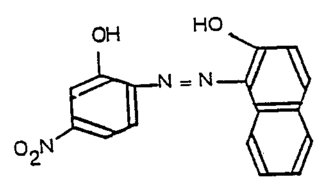 | Grün |

TABELLE C (Fortsetzung)

| I | II | III | IV | V |
|---|---|---|---|---|
| Bsp. Nr. | Metall | Farbstoff | Farbstoff | Farbton |
| 23 | Cr | 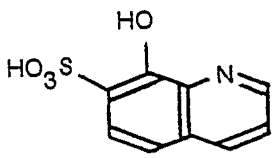 | 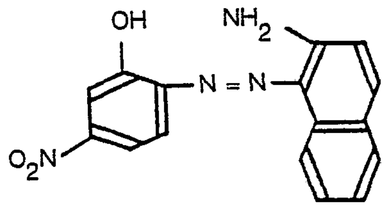 | Grün |

In der Tabelle D sind 1:1-Komplexe aufgeführt, die 1 Molekül des Farbstoffes an 1 Metallatom komplex gebunden, enthalten.

TABELLE D

| I | II | III | IV |
|---|---|---|---|
| Bsp. Nr. | Metall | Farbstoff | Farbton |
| 24 | Fe | 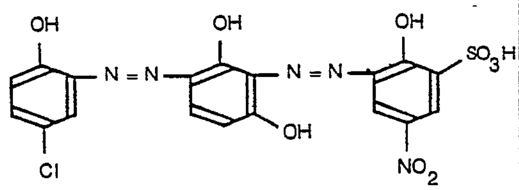 | Braun |
| 25 | Cr | 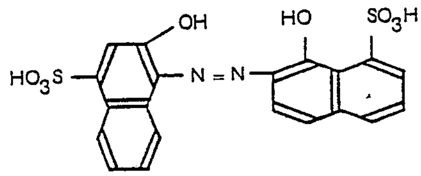 | Blau |
| 26 | Cr | 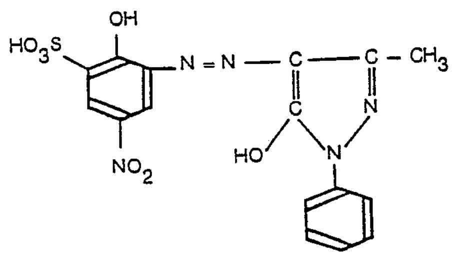 | Orange |
| 27 | Ni | 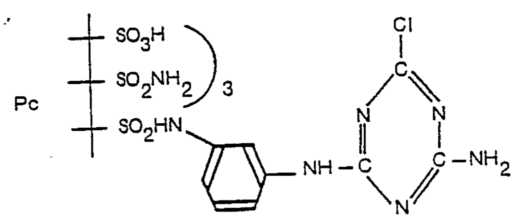 | Türkis |
| 28 | Cu | 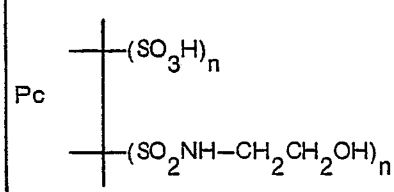 n = 1–2 | Türkis |

Pc bedeutet Phthalocyanin

**Patentansprüche**

1. Verfahren zur Herstellung von Aufbaugranulaten wasserlöslicher Farbstoffe, in dem man mindestens einen wasserlöslichen Farbstoff im pulverförmigen Zustand mit einem Granulierhilfsmittel versetzt und das Gemisch unter Roll- und/oder Mischbewegung durch eine Partikelvergrösserung in eine körnige Form überführt, dadurch gekennzeichnet, dass man als Granulierhilfsmittel

a) mindestens eine Verbindung der Formel I

$$A—(CH_2CH_2O)_n—H \qquad (I)$$

in der A die Gruppe R—O— oder

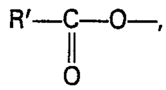

R einen 8 bis 22 Kohlenstoffatome aufweisenden aliphatischen oder alicyclischen Kohlenwasserstoffrest, R′ einen 8 bis 22 Kohlenstoffatome aufweisenden aliphatischen Kohlenwasserstoffrest, und n 10 bis 200, bedeuten, oder

b) eine Mischung aus einer Verbindung der Formel II

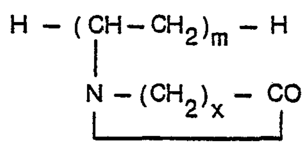

(II)

in der m 50 bis 500 und x 3 bis 5 bedeuten, mit einer Verbindung der Formel III

$$R_1—NH—CO—NH—R_1 \qquad (III)$$

in der $R_1$ unabhängig voneinander Wasserstoff oder Methyl bedeutet, oder

c) eine Mischung einer Verbindung der Formel I mit mindestens einer Verbindung der Formel II oder III verwendet, und

das Granulierhilfsmittel bzw. -hilfsmittelgemisch über seinen Erweichungspunkt bzw. Erweichungsbereich erwärmt, wobei das Granulierhilfsmittel bzw. -hilfsmittelgemisch einen Erweichungspunkt bzw. Erweichungsbereich zwischen 30 und 150°C aufweist und in Mengen von 5 bis 50 Gew.%, bezogen auf den Farbstoff, verwendet wird.

2. Verfahren nach Anspruch 1, dadurch gekennzeichnet, dass man als Granulierhilfsmittel eine eutektische Mischung aus mindestens zwei verschiedenen Verbindungen der Formel I oder einer Verbindung der Formel I mit einer Verbindung der Formeln II oder III oder ein Gemisch einer Verbindung der Formel II mit einer Verbindung der Formel III verwendet.

3. Verfahren nach den Ansprüchen 1 und 2, dadurch gekennzeichnet, dass man als Granulierhilfsmittel eine Verbindung der Formel I verwendet, in der A die Gruppe R—O—, R einen 8 bis 22 Kohlenstoffatome aufweisenden, geradkettigen Kohlenwasserstoffrest und n 35 bis 80 bedeutet.

4. Verfahren nach Anspruch 1, dadurch gekennzeichnet, dass man als Granulierhilfsmittel eine Verbindung der Formel I verwendet, in der A die Gruppe R—O—, R einen 8 bis 22 Kohlenstoffatome aufweisenden alicyclischen Kohlenwasserstoffrest und n 100 bedeuten.

5. Verfahren nach Anspruch 4, dadurch gekennzeichnet, dass man als Granulierhilfsmittel Hydroabietylalkohol veräthert mit 100 Mol Aethylenoxid verwendet.

6. Verfahren nach den Ansprüchen 1 und 2, dadurch gekennzeichnet, dass man als Granulierhilfsmittel eine Verbindung der Formel I verwendet, in der A die Gruppe

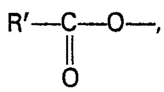

R′ einen 8 bis 22 Kohlenstoffatome aufweisenden, aliphatischen geradkettigen Kohlenwasserstoffrest, und n 10 bis 30 bedeuten.

7. Verfahren nach Anspruch 6, dadurch gekennzeichnet, dass man als Granulierhilfsmittel der Formel I das Kondensationsprodukt aus Oelsäure und 20 Mol Aethylenoxid verwendet.

8. Verfahren nach den Ansprüchen 1 und 2, dadurch gekennzeichnet, dass man als Granulierhilfsmittel ein Gemisch aus einer Verbindung der Formel I, worin A die Gruppe

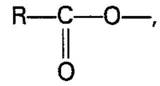

R′ einen 8 bis 22 Kohlenstoffatome aufweisenden, ungesättigten, geradkettigen Kohlenwasserstoffrest und n 10 bis 30 bedeuten, mit Harnstoff, gegebenenfalls im Gemisch mit schmelzpunktherabsetzenden Zusätzen, verwendet.

9. Verfahren nach Anspruch 8, dadurch gekennzeichnet, dass man als Granulierhilfsmittel ein Gemisch aus einem Kondensationsprodukt aus Oelsäure und 20 Mol Aethylenoxid mit Harnstoff, gegebenenfalls im Gemisch mit schmelzpunktherabsetzenden Zusätzen, verwendet.

10. Verfahren nach den Ansprüchen 1 und 2, dadurch gekennzeichnet, dass man als Granulierhilfsmittel ein Gemisch aus einer Verbindung der Formel II, worin x 3 ist, und m die in Anspruch 1 angegebene Bedeutung hat, mit Harnstoff, gegebenenfalls im Gemisch mit schmelzpunktherabsetzenden Zusätzen, verwendet.

11. Verfahren nach den Ansprüchen 1 bis 10, dadurch gekennzeichnet, dass das Granulierhilfsmittel in Mengen von 10 bis 30 Gew.%, bezogen auf den Farbstoff verwendet wird.

12. Verfahren gemäss den Ansprüchen 1 bis 11, dadurch gekennzeichnet, dass als weitere Zusätze 0,1 bis 50 Gew.% an Coupagemitteln verwendet werden.

13. Verfahren gemäss den Ansprüchen 1 bis 12, dadurch gekennzeichnet, dass man wasserlösliche Faserreaktivfarbstoffe verwendet.

14. Granulate hergestellt nach dem Verfahren gemäss den Ansprüchen 1 bis 13, enthaltend insgesamt 5 bis 50 Gew.%, bezogen auf den Farbstoff, mindestens eines Granulierhilfsmittels der Formel I, oder einer Mischung aus mindestens zwei Verbindungen der Formeln I, II oder III.

15. Verwendung der Granulate gemäss Anspruch 14 zum Färben von Textilmaterialien aus wässriger Färbeflotte.

**Claims**

1. A process for producing agglomerates of water-soluble dyes by adding a granulating auxiliary to at least one water-soluble dye, which is in pulverulent form, and converting the mixture, whilst it is being subjected to a tumbling and/or mixing action, by particle enlargement into a granular form, in which process there is used as a granulating auxiliary:

a) at least one compound of the formula I

$$A—(CH_2CH_2O)_n—H \qquad (I)$$

in which A is the group R—O— or

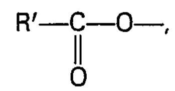

R is an aliphatic or alicyclic hydrocarbon radical containing 8 to 22 carbon atoms, R′ is an aliphatic hydrocarbon radical containing 8 to 22 carbon atoms, and n is 10 to 200, or

b) a mixture of a compound of the formula II

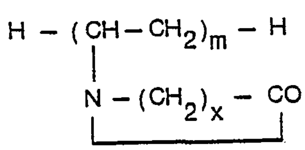

(II)

in which m is 50 to 500, and x is 3 to 5, with a compound of the formula III

$$R_1—NH—CO—NH—R_1 \qquad (III)$$

in which each $R_1$ independently of the other is hydrogen or methyl, or

c) a mixture of a compound of the formula I with at least one compound of the formula II or III; and the granulating auxiliary or auxiliary mixture is heated to above its softening point or softening range, the granulating auxiliary or auxiliary mixture having a softening point or softening range of between 30 and 150°C, and being used in amounts of 5 to 50 per cent by weight, relative to the dye.

2. A process according to Claim 1, wherein the granulating auxiliary used is a eutectic mixture of at least two different compounds of the formula I, or a compound of the formula I with a compound of

the formula II or III, or a mixture of a compound of the formula II with a compound of the formula III.

3. A process according to Claims 1 and 2, wherein the granulating auxiliary used is a compound of the formula I in which A is the group R—O—, R is straight-chain hydrocarbon radical containing 8 to 22 carbon atoms, and n is 35 to 80.

4. A process according to Claim 1, wherein the granulating auxiliary used is a compound of the formula I, in which A is the group R—O—, R is an alicyclic hydrocarbon radical containing 8 to 22 carbon atoms, and n is 100.

5. A process according to Claim 4, wherein the granulating auxiliary used is hydroabietyl alcohol, etherified with 100 mols of ethylene oxide.

6. A process according to Claims 1 and 2, wherein the granulating auxiliary used is a compound of the formula I in which A is the group

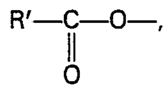

R' is an aliphatic straight-chain hydrocarbon radical containing 8 to 22 carbon atoms, and n is 10 to 30.

7. A process according to Claim 6, wherein the granulating auxiliary of the formula I used is the condensation product from oleic acid and 20 mols of ethylene oxide.

8. A process according to Claims 1 and 2, wherein the granulating auxiliary used is a mixture of a compound of the formula I, in which A is the group

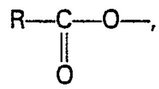

R' is an unsaturated, straight-chain hydrocarbon radical containing 8 to 22 carbon atoms, and n is 10 to 30, with urea, optionally in admixture with additives lowering the melting point.

9. A process according to Claim 8, wherein the granulating auxiliary used is a mixture of a condensation product of oleic acid and 20 mols of ethylene oxide with urea, optionally in admixture with additives lowering the melting point.

10. A process according to Claims 1 and 2, wherein the granulating auxiliary used is a mixture of a compound of the formula II, in which x is 3, and m has the meaning defined in Claim 1, with urea, optionally in admixture with additives lowering the melting point.

11. A process according to Claims 1 to 10, wherein the granulating auxiliary is used in amounts of 10 to 30 per cent by weight, relative to the dye.

12. A process according to Claims 1 to 11, wherein the further additives used are 0.1 to 50 per cent by weight of diluting agents.

13. A process according to Claims 1 to 12, wherein water-soluble fibre reactive dyes are used.

14. Agglomerates produced by the process according to Claims 1 to 13, which contain all together 5 to 50 per cent by weight, relative to the dye, of at least one granulating auxiliary of the formula I, or of a mixture of at least two compounds of the formula I, II or III.

15. Use of the agglomerates obtained according to Claim 14 for dyeing textile materials from an aqueous dye liqour.

**Revendications**

1. Procédé de fabrication de granulés de structure de colorants solubles dans l'eau, dans lequel on ajoute à au moins un colorant soluble dans l'eau à l'état pulvérulent un adjuvant de granulation et on transforme le mélange sous forme de granulés par un mouvement de roulement et/ou de mélange entraînant un grossissement des particules, caractérisé par le fait que l'on utilise comme adjuvant de granulation:

a) au moins un composé de formule I

$$A—(CH_2CH_2O)_n—H \qquad (I)$$

dans laquelle A représente le groupe R—O ou

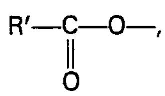

R représente un reste hydrocarboné aliphatique ou alicyclique présentant 8 à 22 atomes de carbone; R' représente un reste hydrocarboné aliphatique présentant 8 à 22 atomes de carbone, et n est un nombre de 10 à 200, ou bien,

b) un mélange d'un composé de formule II

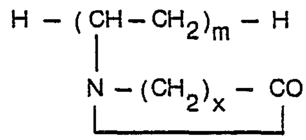

(II)

dans laquelle m est un nombre de 50 à 500, et x de 3 à 5, avec un composé de formule III

$$R_1—NH—CO—NH—R_1 \qquad (III)$$

dans laquelle $R_1$ représentent indépendamment l'un de l'autre de l'hydrogène ou le reste méthyle, ou bien

c) un mélange d'un composé de formule I avec au moins un composé de formule II ou III, et que l'on chauffe l'adjuvant de granulation ou le mélange d'adjuvants au-dessus de son point de ramollissement ou de sa plage de ramollissement, l'adjuvant de granulation ou le mélange d'adjuvants présentant un point de ramollissement ou une plage de ramollissement compris entre 30 et 150°C et étant utilisés en des quantités comprises entre 5 et 50% en poids, par rapport au colorant.

2. Procédé selon la revendication 1, caractérisé par le fait que l'on utilise comme adjuvant de granulation un mélange eutectique d'au moins deux composés différents de formule I ou d'un composé de formule I avec un composé des formules II ou III ou un mélange d'un composé de formule II avec un composé de formule III.

3. Procédé selon les revendications 1 et 2, caractérisé par le fait que l'on utilise comme adjuvant de granulation un composé de formule I dans lequel A représente le groupe R—O—; R représente un reste hydrocarboné à chaîne droite présentant 8 à 22 atomes de carbone, et n représente un nombre de 35 à 80.

4. Procédé selon la revendication 1, caractérisé par le fait que l'on utilise comme adjuvant de granulation un composé de formule I, dans lequel A représente le groupe R—O; R représente un reste hydrocarboné alicyclique présentant 8 à 22 atomes de carbone, et n représente 100.

5. Procédé selon la revendication 4, caractérisé par le fait que l'on utilise comme adjuvant de granulation l'alcool hydro-abiétylique éthérifié avec 100 moles d'oxyde d'éthylène.

6. Procédé selon les revendications 1 et 2, caractérisé par le fait que l'on utilise comme adjuvant de granulation un composé de formule I dans lequel A représente le groupe

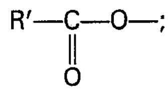

R' représente un reste hydrocarboné à chaîne droite, aliphatique, présentant 8 à 22 atomes de carbone, et n est un nombre de 10 à 30.

7. Procédé selon la revendication 6, caractérisé par le fait que l'on utilise comme adjuvant de granulation de formule I le produit de condensation de l'acide oléique et de 20 moles d'oxyde d'éthylène.

8. Procédé selon les revendications 1 et 2, caractérisé par le fait que l'on utilise comme adjuvant de granulation un mélange d'un composé de formule I dans lequel A représente le groupe

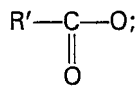

R' représente un reste hydrocarboné à chaîne droite, insaturé, présentant 8 à 22 atomes de carbone, et n est un nombre de 10 à 30, avec l'urée, éventuellement en mélange avec des additifs abaissant le point de fusion.

9. Procédé selon la revendication 8, caractérisé par le fait que l'on utilise comme adjuvant de granulation un mélange d'un produit de condensation de l'acide oléique et de 20 moles d'oxyde d'éthylène avec l'urée, éventuellement en mélange avec des additifs abaissant le point de fusion.

10. Procédé selon les revendications 1 et 2, caractérisé par le fait que l'on utilise comme adjuvant de granulation un mélange d'un composé de formule II où x est 3, et m a la signification indiquée dans la revendication 1, avec l'urée, éventuellement en mélange avec des additifs abaissant le point de fusion.

11. Procédé selon les revendications 1 à 10, caractérisé par le fait que l'adjuvant de granulation est utilisé en des quantités comprises entre 10 et 30% en poids, par rapport au colorant.

12. Procédé selon les revendications 1 à 11, caractérisé par le fait que l'on utilise comme autres additifs de 0,1 à 50% en poids d'agents de coupage.

13. Procédé selon les revendications 1 à 12, caractérisé par le fait que l'on utilise des colorants réactifs avec les fibres solubles dans l'eau.

14. Granulés fabriqués selon le procédé conforme aux revendications 1 à 13, contenant au total 5 à 50% en poids, par rapport au colorant, d'au moins un adjuvant de granulation de formule I, ou d'un mélange d'au moins deux composés de formules I, II ou III.

15. Utilisation des granulés selon la revendication 14, pour la teinture de matières textiles à partir d'un bain de teinture aqueux.